# EUROPEAN PATENT SPECIFICATION

(11) **EP 3 971 815 B1**
(45) Date of publication and mention of the grant of the patent: **12.02.2025**
(21) Application number: 20847417.1
(22) Date of filing: 20.05.2020
(51) Int. Cl.: G06Q 40/08, B60W 40/08, B60W 40/09

(54) **INFORMATION PROCESSING APPARATUS**
INFORMATIONSVERARBEITUNGSVORRICHTUNG
DISPOSITIF DE TRAITEMENT D'INFORMATIONS

(30) Priority: 26.07.2019 JP 2019137991
(43) Date of publication of application: 23.03.2022
(73) Proprietor: NTT DOCOMO, INC., Tokyo 100-6150 (JP)
(72) Inventor: YAMAGUCHI, Junichi, Tokyo 100-6150 (JP); ABE, Kimikazu, Tokyo 100-6150 (JP); KONDO, Tatsunari, Tokyo 100-6150 (JP)
(74) Representative: Hoffmann Eitle
(86) International application number: PCT/JP2020/019950
(87) International publication number: WO 2021/019876

(56) References cited:
- EP-A1- 3 451 268
- EP-A2- 2 891 589
- DE-A1- 102015 207 774
- JP-A- 2001 063 400
- JP-A- 2015 128 988
- JP-A- 2019 046 318

## Description

### Technical Field

The present invention relates to a technique for specifying a user driving a vehicle.

### Background Art

Consideration has been given to a scheme in which a car insurance rate is determined in accordance with a level of skill and safety of a vehicle driver, for example. Accordingly, it is desirable to be able to identify a user who is driving a vehicle. For example, in Patent Literature 1, a technique is disclosed in which a history of drivers and on-board users is stored for each day of the week along with time slots in in-vehicle equipment 21, and when a user ID, driving environment information, and the like are received upon transmittance from a terminal 10 are received, a cell corresponding to an on-board user in a history information table is specified, and the driver is estimated.

### Citation List

### Patent Literature

Patent Literature 1: JP-2010-36699A ;
EP 2891589 A2 relates to a method for an in-vehicle computing system including detecting a request to perform a driver-dependent function and inferring an identity of the driver based on current driving
data/behavior relative to one or more driver profiles, each of the one or more driver profiles generated using driver-specific past driving data/behavior.

EP 3451268 A1 relates to an information processing apparatus including a vehicle movement history information storage unit that stores vehicle movement history information concerning a movement history including position information and clock time information of each of a plurality of vehicles, a terminal movement history information storage unit that stores terminal movement history information concerning a movement history including position information and clock time information of each of a plurality of mobile terminals and a vehicle specifying unit that specifies one or more vehicles having a possibility of being boarded by a user of each mobile terminal, from among the vehicles, based on the vehicle movement history information and the terminal movement history information.

### Summary of Invention

### Technical Problem

An object of the present invention is to provide a learning model for specifying a user who is driving a vehicle.

### Solution to Problem

The object of the invention is achieved by the subject-matter of the independent claim. Advantageous embodiments are defined in the dependent claims. Further examples are provided for facilitating the understanding of the invention.

The on-board user estimating unit estimates the group of users on board the vehicle by comparing a position of a terminal carried by each of the on-board users and a position of the vehicle.

The on-board user estimating unit estimates the group of users on board the vehicle by comparing data detected by a terminal carried by each of the on-board users and data detected by the vehicle.

The learning model generating unit may generate a learning model using, as training data, identification information of a user estimated by the driver estimating unit, driving attributes of the user, and identification information of users included in the group of users specified by the on-board user specifying unit.

The learning model generating unit generates a learning model using, as training data, identification information of a user estimated by the driver estimating unit, attributes of the user, and attributes of the vehicle.

The learning model generating unit generates a learning model using, as training data, identification information of a user estimated by the driver estimating unit, driving attributes of the user, and an environment in which the vehicle is driven.

### Effects of Invention

According to the present invention, a learning model for specifying a user who is driving a vehicle is provided.

### Brief Description of Drawings

FIG. 1 is a diagram illustrating an example of the configuration of information processing system 1 according to an embodiment of the present invention.
FIG. 2 is a diagram illustrating a hardware configuration of server 30.
FIG. 3 is a diagram illustrating a hardware configuration of terminal 10.
FIG. 4 is a diagram illustrating an example of the functional configuration of information processing system 1.
FIG. 5 is a diagram illustrating a concept of estimating a user who is driving vehicle 20.
FIG. 6 is a sequence diagram illustrating an example of the learning model generation operation performed by information processing system 1.
FIG. 7 is a sequence diagram illustrating an example of the driver specifying operation performed by information processing system 1.

### Description of Embodiments

### [Configuration]

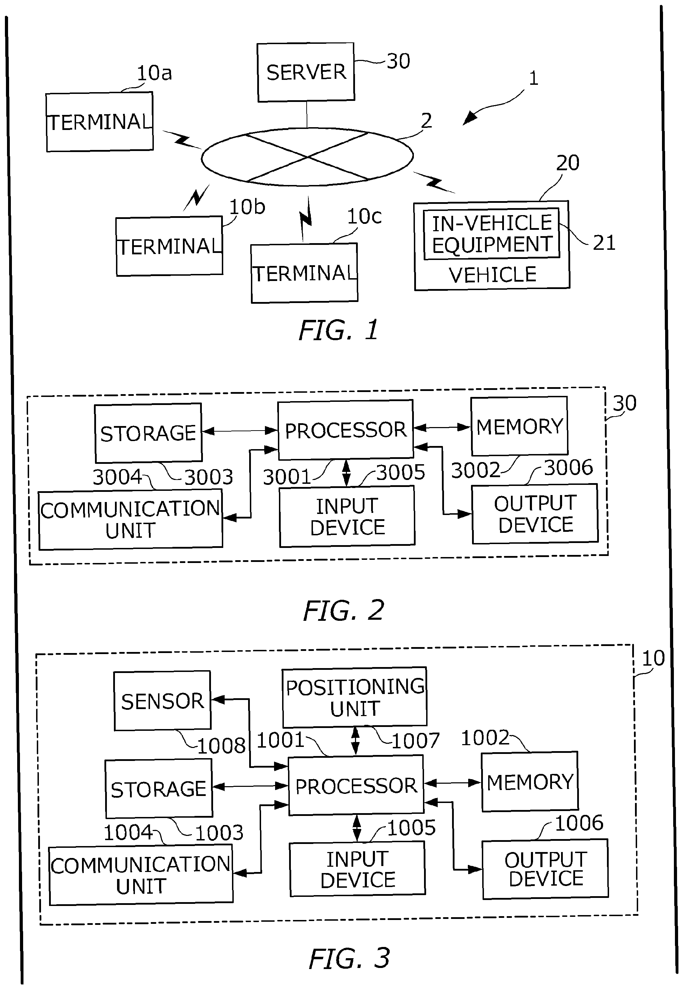

FIG. 1 is a diagram illustrating an example of information processing system 1 according to the present embodiment. Information processing system 1 is a system for specifying a user who is driving a vehicle. As shown in FIG. 1, information processing system 1 includes a plurality of terminals 10a, 10b, and 10c, which are respectively used by a plurality of users, in-vehicle equipment 21 that is mounted to vehicle 20, server 30 that specifies a user who is driving vehicle 20, and communication network 2, which includes a wireless or wired communication network for communicably connecting these apparatuses.

Terminals 10a, 10b, and 10c, in-vehicle equipment 21, and server 30 are each a computer. Specifically, each of terminals 10a, 10b, and 10cis a user-carriable computer, such as a smartphone, a wearable terminal, or a tablet. In-vehicle equipment 21 is a computer that is integrated in or connected to a car navigation apparatus or a control apparatus that controls the components of vehicle 20, for example. Server 30 functions as an information processing apparatus that generates a learning model for specifying a user who is driving vehicle 20, and also functions as a driver specification apparatus for specifying a user who is driving vehicle 20 using the learning model.

It is of note that in FIG. lone vehicle 20, one in-vehicle equipment 21 and one server 30 are illustrated, but a plurality of vehicles 20, in-vehicle equipment 21, and servers 30 may be included. Also, three terminals 10a, 10b, and 10c are illustrated as terminals used by users, but the number of users and the number of terminals may be any number of two or more. It is of note that terminals 10a, 10b, and 10c have a similar configuration and functions, and therefore are hereafter collectively referred to as terminals 10.

FIG. 2 is a diagram illustrating a hardware configuration of server 30. Physically, server 30 is configured as a computer that includes processor 3001, memory 3002, storage 3003, communication unit 3004, input device 3005, output device 3006, a bus for connecting these apparatuses, and the like. These apparatuses operate using power supplied from a battery (not shown). It is of note that, in the following description, "apparatus" can be substituted with "circuit," "device," "unit," or the like. With respect to each apparatus shown in FIG. 2, the hardware configuration of server 30 may also be configured to include one or a plurality of the apparatuses, or may be configured to not include one or more of the apparatuses. Server 30 may be configured by communicably connecting a plurality of apparatuses each having different casings.

Functions of server 30 are realized by causing predetermined software (programs) to be loaded on hardware such as processor 3001 and memory 3002 and processor 3001 for performing computational operations to control communication by communication unit 3004, and to control at least one of reading and writing of data in memory 3002 and storage 3003.

Processor 3001 controls the computer as a whole by causing an operating system to run, for example. Processor 3001 may be constituted of a central processing unit (CPU) that includes an interface with peripheral apparatuses, a control apparatus, a computational operation apparatus, registers, and the like. Also, a baseband signal processing unit, a call processing unit, and the like may be realized by processor 3001, for example.

Processor 3001 reads a program (program code), a software module, data and the like from at least one of storage 3003 and communication unit 3004 for writing into memory 3002, and executes a variety of processing according to the read-out program and the like. A program that causes a computer to execute at least some of the later-described operations is used as the program. The functional blocks of server 30 may be realized by a control program that is stored in memory 3002 and runs in processor 3001. The various types of processing may be executed by one processor 3001, but may be executed simultaneously or sequentially by two or more processors 3001. Processor 3001 may be implemented using one or more computer chips. It is of note that a program may be transmitted from communication network 2 to server 30 over a wired communication line.

Memory 3002 is a computer-readable recording medium, and may be constituted of at least one of a ROM (Read Only Memory), an EPROM (Erasable Programmable ROM), an EEPROM (Electrically Erasable Programmable ROM), a RAM (Random Access Memory), and so on, for example. Memory 3002 may also be referred to as a "register," "cache," "main memory" (a main storage apparatus), or the like. Memory 3002 can store an executable program (program code) for implementing a method according to the present embodiment, software modules, and the like.

Storage 3003 is a computer-readable recording medium, and, for example, may be constituted of at least one of an optical disk such as a CD-ROM (Compact Disc ROM), a hard disk drive, a flexible disk, a magnetooptical disk (for example, a compact disk, a digital versatile disk, or a Blu-ray (registered trademark) disk), a smartcard, a flash memory (for example, a card, a stick, or a key drive), a Floppy (registered trademark) disk, a magnetic strip, and the like. Storage 3003 may be referred to as an auxiliary storage apparatus.

Communication unit 3004 is hardware (a transmitting and receiving device) for performing communication between computers via communication network 2, and is also referred to as a network device, a network controller, a network card, and a communication module, for example.

Input device 3005 is an input device for receiving an input from an external apparatus (e.g., a key, a switch, a button, or a microphone). Output device 3006 is an output device that performs output to an external apparatus (e.g., a display, a speaker, or a LED lamp). It is of note that input device 3005 and output device 3006 may also be made integral (e.g., a touch panel).

Apparatuses such as processor 3001 and memory 3002 are connected via a bus for communicating information. The bus may be constituted of a single bus, or may be constituted of a plurality of buses for connection between apparatuses.

Server 30 may be constituted of hardware such as a microprocessor, a digital signal processor (DSP), an ASIC (Application Specific Integrated Circuit), a PLD (Programmable Logic Device), an FPGA (Field Programmable Gate Array), and the like, and some or all of the functional blocks may be realized by the hardware. For example, processor 3001 may be implemented using at least one piece of hardware.

FIG. 3 is a diagram illustrating a hardware configuration of terminal 10. Terminal 10 is physically configured as a computer that includes processor 1001, memory 1002, storage 1003, communication unit 1004, input device 1005, output device 1006, and a bus for connecting these apparatuses, similarly to server 30, and further includes positioning unit 1007 and sensor 1008.

Sensor 1008 includes a group of sensors for detecting various states such as a posture and orientation of terminal 10, examples of which include a gyro sensor, an acceleration sensor, and a magnetic (direction) sensor.

Positioning unit 1007 measures a position of terminal 10. Positioning unit 1007 is a GPS (Global Positioning System) receiver, for example, and measures the position of terminal 10 based on GPS signals received from a plurality of satellites.

It is of note that communication unit 1004 included in terminal 10 is hardware (a transmitting and receiving device) for performing communication that conforms to a communication standard such as LTE (Long Time Evolution) between computers via communication network 2 to realize wireless communication. The communication unit may be configured to include a high frequency switch, a duplexer, a filter, a frequency synthesizer, and the like to realize at least one of frequency division duplex (FDD: Frequency Division Duplex) and time division duplex (TDD: Time Division Duplex), for example. Also, a transmitting and receiving antenna, an amplifier unit, a transmitting and receiving unit, a transmission path interface, and the like may be realized by the communication unit. The transmitting and receiving unit may be implemented such that the transmitting unit and the receiving unit are separated physically or logically.

In-vehicle equipment 21 is physically configured as a computer that includes a processor, a memory, a storage, a communication unit, an input device, an output device, a positioning unit, a sensor, a bus for connecting these apparatuses, and the like, similarly to terminal 10. The sensor in in-vehicle equipment 21 includes a sensor group for detecting a driving behavior of a user with respect to vehicle 20. The driving behavior of the user is represented by states of vehicle operating mechanisms operated by the user, such as a steering wheel, an accelerator pedal, a brake pedal, a direction indicator switch , and a light switch. Specifically, the sensors of in-vehicle equipment 21 include an accelerator pedal sensor for detecting a pressing amount and a timing of pressing and release of the accelerator pedal, a brake pedal sensor for detecting a pressing amount and a timing of pressing and release of the brake pedal, vehicle speed pulse sensors that are respectively installed in a right front wheel, a left front wheel, a right rear wheel, and a left rear wheel of vehicle 20 and that output rotational speeds of the respective wheels, a steering angle sensor for detecting a steering angle and a timing of a steering operation made to a steering wheel, sensors for detecting timings at which the direction indicator switch and the light switch are operated, and the like.

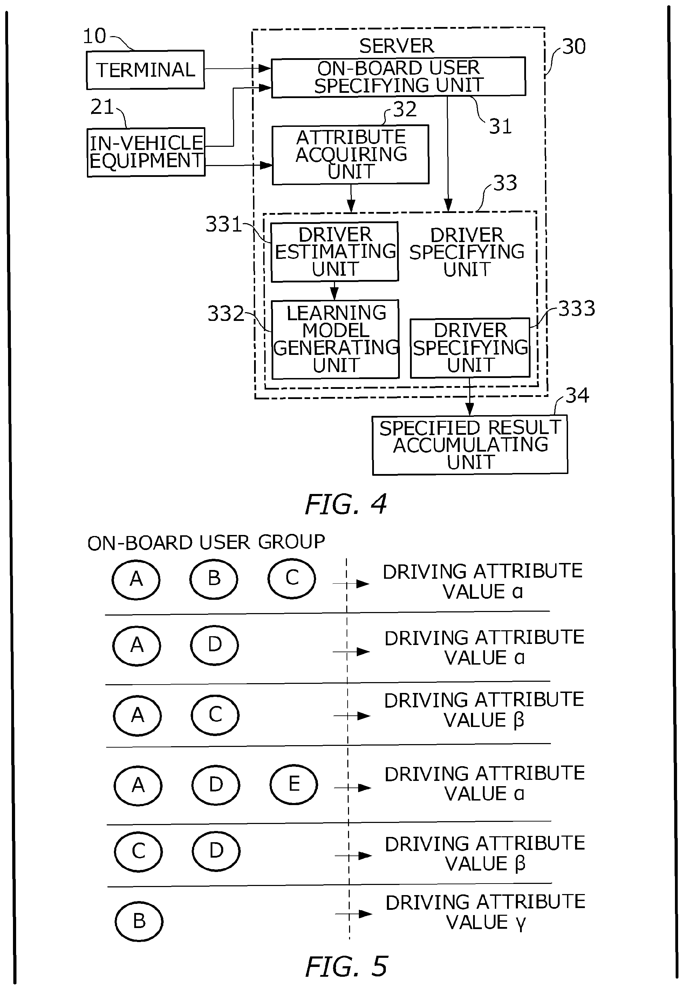

FIG. 4 is a block diagram illustrating a functional configuration of information processing system 1. In server 30, on-board user specifying unit 31 specifies a group of users on board vehicle 20. The group of users on board vehicle 20 includes a user who is driving vehicle 20 and at least one user who is a passenger in vehicle 20 and is not driving vehicle 20. In the following, a user driving vehicle 20 (a person who participates in driving vehicle 20 or is in charge of driving vehicle 20) is referred to as a "driver." Also, the group of users including the driver, as well as the at least one user who is on board vehicle 20 and is not driving vehicle 20 (a person who does not participate in driving vehicle 20 or is not in charge of driving vehicle 20, namely, a passenger) is collectively referred to as "on-board users." On-board user specifying unit 31 acquires positions measured by terminals 10 carried by respective users, and a position measured by in-vehicle equipment 21 from the terminals 10 and in-vehicle equipment 21 via communication network 2. Also, on-board user specifying unit 31 compares the positions of the terminals 10 and the position of in-vehicle equipment 21 (that is, the position of vehicle 20), extracts information from the terminals 10 that move in such a manner as to match the time series displacement of the position of in-vehicle equipment 21, and specifies the users of the (extracted) terminals 10 from which the information is extracted, as a group of users (on-board users) that is on board in the vehicle 20. In short, if a user is on board vehicle 20, the position of vehicle 20 at any given time along with that of the on-board users closely match.

Attribute acquiring unit 32 acquires attributes (an attribute value) with regard to driving of vehicle 20 by the driver. The driving attributes can be obtained from detection results of the aforementioned sensors of in-vehicle equipment 21. That is, attribute acquiring unit 32 acquires, from in-vehicle equipment 21 of vehicle 20 via communication network 2, detection results of the sensors of the in-vehicle equipment 21, such as a pressing level and a timing of pressing and release of the accelerator pedal, a pressing level and a timing of pressing and release of the brake pedal, rotational speeds of the wheels, a steering angle and timing of the steering operation performed on the steering wheel, and operation timing of the direction indicator switch, the light switch, and the like, and obtains the driving attributes of vehicle 20 to which the in-vehicle equipment 21 is mounted by analyzing the detection results in accordance with a predetermined algorithm. Driving behavior of drivers of vehicle 20 vary depending on factors such as driving skill and proficiency, and also on human characteristics such as age, gender, and personality, for example. As a result, driving behavior is unique to each driver.

Driver estimating unit 331 estimates, based on the group of users specified by on-board user specifying unit 31 with respect to a plurality of movements of vehicle 20, that the driver who drives vehicle 20 is a user who is included in the group of users and for whom attributes acquired by attribute acquiring unit 32 are the same for a plurality of movements of vehicle 20.

FIG. 5 is a diagram illustrating a concept of driver estimating unit 331 for estimating a user who is driving vehicle 20. In FIG. 5, histories of on-board users and driving attributes are shown relative to a plurality of movements of a certain vehicle 20. Specifically, groups of users on board vehicle 20 are associated with attributes of driving vehicle 20 at respective times. In the example shown in FIG. 5, the driving attribute value of vehicle 20 when users A, B, and C are on board is α, the driving attribute value of vehicle 20 when users A and D are on board is α, the driving attribute value of vehicle 20 when users A and C are on board is β, the driving attribute value of vehicle 20 when users A, D, and E are on board is α, the driving attribute value of vehicle 20 when users C and D are on board is β, and the driving attribute value of vehicle 20 when user B is on board is γ.

If the number of on-board users of one vehicle is one (in FIG. 5 when only user B is on board), the on-board user is the driver. Therefore, the driving attributes at this time (driving attribute value γ in FIG. 5) consists of the driving attributes of user B.

On the other hand, if a plurality of users are on board, it will not generally be known which of the on-board users is the driver. However, there are cases where, based on histories of on-board users and attributes of driving with respect to a plurality of movements of vehicle 20, a user who is always on board when attributes are the same can be extracted. From the example shown in FIG. 5, it will be understood that in each of the cases when users A, B, and C are on board, when users A and D are on board, and when users A, D, and E are on board, the driving attributes have the same driving attribute value α, and in this example user A is always on board. Also, it will be understood that when users A and C are on board, and users C and D are on board, the driving attributes have the same value β, and in this example user C is always on board. In these cases, it can be estimated that the driving attribute value when user A is the driver is driving attribute value α, and the driving attribute value when user C is the driver is driving attribute value β.

Learning model generating unit 332 generates a learning model using the user IDs of users estimated by driver estimating unit 331 and the attributes of driving when users are on board as training data. Specifically, learning model generating unit 332 generates a learning model using one of the aforementioned driving attribute values (e.g., driving attribute value α) as an explanatory variable, and the user ID of a driver (e.g., user ID of user A) as an objective variable. When various driving attributes are input to the learning model generated in this way, a user ID of a driver specified by the attributes is output.

Driver specifying unit 333 inputs the driving attributes acquired by attribute acquiring unit 32 into the learning model, and specifies a user of the user ID output from the learning model as the driver.

It is of note that if at least one condition is satisfied from among the conditions that the stop period of vehicle 20 exceeds a threshold value, the driving source of vehicle 20 has stopped, and a door of vehicle 20 has been opened and closed, then driver specifying unit 333 resets the result of specifying the user who is driving vehicle 20. This is because, if one of these conditions is satisfied, it is possible that the user who is driving vehicle 20 has changed. Then, if at least one condition is satisfied from among the conditions that vehicle 20 starts moving again, the driving source of the vehicle starts operating, and a door of the vehicle is again opened and closed, then driver specifying unit 33 again attempts to specify the driver.

In this way, specified result accumulating unit 34 accumulates the results of specifications made by driver specifying unit 333. Then, specified result accumulating unit 34 performs an output operation such as displaying the results on a display apparatus and writing the results in a storage medium, as appropriate.

### [Operations]

Next, operations of information processing system 1 will be described. It is of note that in the following description where server 30 is described as an agent of processing, the specific meaning is that the processing is executed by processor 3001 performing computation in response to predetermined software (program) being loaded onto hardware such as processor 3001 and memory 3002, and controlling communication by communication unit 3004 and reading and/or writing of data from or to memory 3002 and storage 3003. The same applies to terminal 10 and in-vehicle equipment 21.

The operations of information processing system 1 include a phase for generating the aforementioned learning model and a phase for specifying a driver using the learning model. These phases may be performed in parallel simultaneously, or may be performed otherwise.

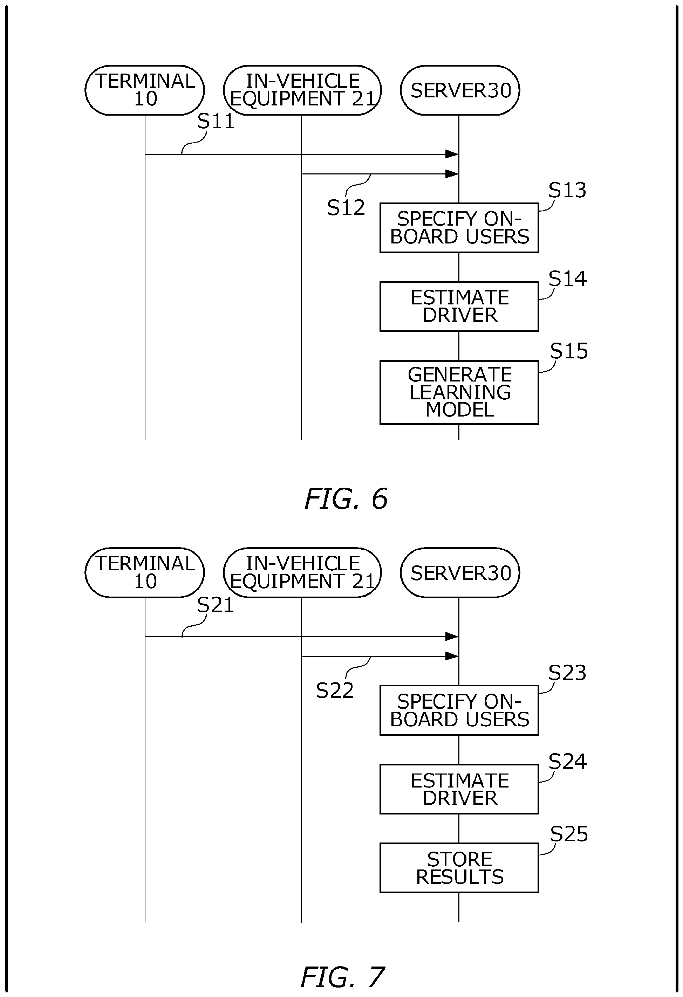

First, the phase for generating a learning model will be described. In FIG. 6, each terminal 10 regularly transmits the position measured by positioning unit 1007 to server 30 via communication network 2 (step S11). Meanwhile, in-vehicle equipment 21 regularly transmits the position measured by the positioning unit and the detection results of the sensors to server 30 via communication network 2 (step S12). Accordingly, on-board user specifying unit 31 of server 30 acquires the positions of terminals 10 and the position of in-vehicle equipment 21 (that is, the position of vehicle 20). Also, attribute acquiring unit 32 of server 30 acquires the driving attributes of the driver of vehicle 20. It is of note that the sequence in which step S11 and step S12 is performed is interchangeable.

In server 30, on-board user specifying unit 31 compares the positions of terminals 10 with the position of in-vehicle equipment 21 (that is, the position of vehicle 20), extracts information from terminals 10 that move in such a manner as to match the time series displacement of the position of in-vehicle equipment 21, and specifies the users of the extracted terminals 10 as a group of users (on-board users) that is on board the vehicle 20 (step S13).

Next, in server 30, driver estimating unit 331 estimates, based on the user groups specified by on-board user specifying unit 31 with respect to a plurality of movements of vehicle 20, that the driver is a user who is included in common in the groups of users for which the attribute acquired by attribute acquiring unit 32 is the same with respect to a plurality of movements of vehicle 20 (step S14). Cases exist where it is not possible to estimate the driver as described in the example shown in FIG. 5, such as when an amount of data for the moving history of vehicle 20 is insufficient. In such cases, the processing does not move to the next step S15. Rather, the processing moves to step S15 if the driver has been estimated by driver estimating unit 331.

Then, learning model generating unit 332 generates a learning model using the user IDs of users estimated by driver estimating unit 331 and the driving attributes when users are on board as training data (step S15). Specifically, learning model generating unit 332 generates a learning model using the driving attribute as an explanatory variable, and the user ID of a driver as an objective variable. When the learning model for specifying a certain user as the driver is generated in this way, the generated learning model is stored in learning model generating unit 332.

Next, the phase for specifying the driver using the learning model will be described. In FIG. 7, each terminal 10 regularly transmits the position measured by positioning unit 1007 to server 30 via communication network 2 (step S21). Meanwhile, in-vehicle equipment 21 regularly transmits the position measured by the positioning unit and the detection results of the sensors to server 30 via communication network 2 (step S22). Accordingly, on-board user specifying unit 31 of server 30 acquires the positions of terminals 10 and the position of in-vehicle equipment 21 (that is, the position of vehicle 20). Also, attribute acquiring unit 32 of server 30 acquires driving attributes of vehicle 20 performed by the driver. It is of note that the sequence in which step S21 and step S22 is performed is interchangeable.

In server 30, on-board user specifying unit 31 compares the positions of terminals 10 with the position of in-vehicle equipment 21 (that is, the position of vehicle 20), extracts information from terminals 10 that move in such a manner as to match the time series displacement of the position of in-vehicle equipment 21, and specifies the users of the (extracted) terminals 10 as a group of users (on-board users) that is on board the vehicle 20 (step S23).

Next, in server 30, driver specifying unit 333 inputs the driving attributes acquired by attribute acquiring unit 32 into the aforementioned learning model, and specifies a user of the user ID output from the learning model as the driver (step S24). It is of note that if the specified user ID is included in the user IDs of the on-board users specified by on-board user specifying unit 31, it is determined that the result of specifying the driver by driver specifying unit 333 is correct. On the other hand, if the specified user ID is not included in the user IDs of the on-board users specified by on-board user specifying unit 31, it is determined that the result of specifying the driver by driver specifying unit 333 is not correct, and driver specifying unit 333 performs predetermined error processing such as outputting a message indicating that specification of the driver is not possible. Driver specifying unit 333 also performs predetermined error processing if the user ID of a driver is not output as a result of inputting the driving attributes acquired by attribute acquiring unit 32 into the learning model.

Also, in server 30, specified result accumulating unit 34 accumulates the results of specifications made by driver specifying unit 33 (step S25). The accumulated results are used in various applications such as for determining a car insurance rate for a user, for example.

According to the embodiment described above, a learning model for specifying a user who is driving a vehicle is provided. Furthermore, an advantage is obtained in that a burden on users in compiling the learning model is small because the users need only be on board vehicle 20.

### [Modifications]

The present invention is not limited to the embodiment described above. The embodiment described above may also be modified as follows. Also, two or more of the following modifications may be implemented in combination[,so long as no contradiction arises from such combination].

### [Modification 1]

The present invention can be considered as a learning model generated by server 30.

### [Modification 2]

In the embodiment described above, on-board user specifying unit 31 specifies a group of users (on-board users) that is on board vehicle 20 based on positions of terminals 10 and a position of in-vehicle equipment 21 (that is, the position of vehicle 20). However, the method of specifying an on-board user is not limited to the example described in the embodiment. On-board user specifying unit 31 may specify an on-board user by comparing a physical variable such as sound, vibration, or acceleration, which is detected by terminals 10, with a physical variable such as sound, vibration, or acceleration, which is detected by in-vehicle equipment 21, instead of using positional information, for example. Noise inside and outside vehicle 20 and environmental sound in a vicinity where vehicle 20 is running can be detected by a terminal 10 of a user on board vehicle 20; and can also be detected by in-vehicle equipment 21 of vehicle 20. Such detection results show closely correlated changes in a like time series. Also, vibration and acceleration in vehicle 20 when the vehicle 20 is running can be detected by a terminal 10 of a user on board vehicle 20, and can also be detected by in-vehicle equipment 21 of vehicle 20. Such detection results also show closely correlated changes in a like time series . Accordingly, on-board user specifying unit 31 can specify a group of users on board the vehicle 20 by comparing data detected by terminal 10 carried by a user with data detected by the vehicle 20, and determining that the data match.

### [Modification 3]

Driving attributes of a driver may not always be the same, and may vary dependent on differing driving conditions. For example, driving attributes of a driver may change dependent on a combination of the driver and other users who are on board vehicle 20 with the driver. It can be conceived that if the driver is on board with an elderly user, an infant user, or a significant other user, the driver may drive the vehicle carefully and smoothly. On the other hand, if the driver is on board with one or more users of the same gender and generation the driver may drive the vehicle relatively less carefully and smoothly. Therefore, learning model generating unit 332 may also generate a learning model using as training data the identification information of a user estimated by driver estimating unit 331, the driving attributes of the user, and identification information of users included in the group of users specified by on-board user specifying unit 31. In this example, when a user drives vehicle 20, the user notifies server 30 that the user is the driver by indicating his/her user ID by use of his/her terminal 10. Learning model generating unit 332 of server 30 acquires the driving attributes based on detection results of the sensors that are acquired from in-vehicle equipment 21 of vehicle 20, and generates the learning model using the attributes and the user IDs of the on-board users specified by on-board user specifying unit 31 as explanatory variables, and the notified user ID of the user as an objective variable. When specifying a driver, driver specifying unit 333 acquires driving attributes based on detection results of the sensors that are acquired from in-vehicle equipment 21 of vehicle 20, and obtains the user ID of a driver by inputting the driving attributes and the user IDs of the on-board users specified by on-board user specifying unit 31 to the learning model.

### [Modification 4]

Driving attributes of a driver may change dependent on vehicle attributes of vehicle 20 to be driven. For example, if vehicle 20 is a family car, the driver may drive the vehicle carefully or smoothly. On the other hand, if vehicle 20 is a sports car the driver may drive the vehicle relatively less carefully and smoothly. Accordingly, learning model generating unit 332 may also generate a learning model using the identification information of a user estimated by driver estimating unit 331, the driving attributes of the user, and the attributes of vehicle 20 as training data. In this example, when a user drives vehicle 20, the user notifies server 30 that the user is the driver by using his/her user ID by operating his/her terminal 10. Also, in-vehicle equipment 21 notifies server 30 of information for specifying attributes of vehicle 20 (e.g., vehicle ID, or the like). Learning model generating unit 332 of server 30 acquires driving attributes based on detection results of the sensors that are acquired from in-vehicle equipment 21 of vehicle 20, and generates the learning model using the attributes and the notified vehicle attributes as explanatory variables, and the notified user ID of the user as an objective variable. When specifying the driver, driver specifying unit 333 acquires driving attributes based on the detection results of the sensors that are acquired from in-vehicle equipment 21 of vehicle 20, and obtains the user ID of a driver by inputting the driving attributes and the vehicle attributes notified from in-vehicle equipment 21 to the learning model.

### [Modification 5]

Driving attributes of a driver may change dependent on a driving environment (e.g., weather, time slot, and road type) for example. For example, if the weather is bad, the driver may drive vehicle 20 carefully or smoothly. On the other hand, if the weather is good the driver may drive vehicle 20 relatively less carefully and smoothly. Also, if driving at night, the driver may drive vehicle 20 carefully or smoothly. On the other hand, if driving during the day the driver may drive vehicle 20 less carefully and smoothly. If driving on an unpaved road, the driver may drive vehicle 20 carefully or smoothly. On the other hand, if driving on a paved road the driver may drive vehicle 20 less carefully and smoothly. Therefore, learning model generating unit 332 may be configured to generate a learning model using the identification information of a user estimated by driver estimating unit 331, the driving attributes of the user, and the environment where the vehicle is driven, as training data. In this example, when a user drives vehicle 20, the user notifies server 30 that the user is the driver by using his/her user ID by using his/her terminal 10. Learning model generating unit 332 of server 30 acquires the driving attributes based on the detection results of the sensors that are acquired from in-vehicle equipment 21 of vehicle 20, and generates the learning model using the attributes and the environment at the time of driving (e.g., weather, time slot, and road type) as explanatory variables, and the notified user ID of the user as an objective variable. The weather and the road type can be specified based on the position of terminal 10 or in-vehicle equipment 21. Also, the time slot can be specified by a timer of server 30 or the like. When specifying the driver, driver specifying unit 33 acquires driving attributes based on the detection results of the sensors that are acquired from in-vehicle equipment 21 of vehicle 20, and obtains the user ID of the driver by inputting the attributes and the driving environment to the learning model.

### [Modification 6]

In the phase for generating the learning model described in the embodiment above, driver estimating unit 331 estimates a driver (step S14), and learning model generating unit 332 generates a learning model using the user IDs of the estimated users and the driving attributes of the estimated users as training data (step S15). A configuration is possible in which, after generating the learning model using the training data, each time new training data is obtained, learning model generating unit 332 updates the learning model to improve accuracy by performing machine learning using the newly obtained training data in addition to prior-obtained training data. It is of note that driving attributes of a user may notably differ dependent on a state of mind and consequent behavior of the user, and also dependent on a change in driving environment and the like at a time of driving. Therefore, there will be cases where it is not appropriate to use driving attributes as training data. Accordingly, learning model generating unit 332 may perform the following processing when newly obtained driving attributes with respect to a certain user differ, by a threshold value or more, from prior-obtained driving attributes of the user. In the following, an example of transition of a driving attribute acquired each time driver Ais estimated at step S14 is shown.
- driving attribute value α when driver Ais estimated at step S14 in a first movement
- driving attribute value α when driver A is estimated at step S14 in a second movement
- driving attribute value α when driver Ais estimated at step S14 in a third movement
- driving attribute value β when driver A is estimated at step S14 in a fourth movement
- driving attribute value α when driver Ais estimated at step S14 in a fifth movement
- driving attribute value α when driver Ais estimated at step S14 in a sixth movement
- driving attribute value α when driver A is estimated at step S14 in a seventh movement
- driving attribute value α when driver A is estimated at step S14 in an eighth movement
- driving attribute value α when driver Ais estimated at step S14 in a ninth movement
- driving attribute value α when driver Ais estimated at step S14 in a tenth movement

In such a case, learning model generating unit 332 deems driving attribute value β in the fourth movement to be noise, and does not adopt it as training data for driver A, and instead adopts driving attribute value α as the training data. In short, learning model generating unit 332 uses, as training data, attributes in common that are acquired at a predetermined ratio (e.g., 80%) or more (in other words, an attribute a frequency of appearance of which is a predetermined value or more, e.g., a driving attribute value α that is acquired 9 times out of a total 10 times, which corresponds to 80% or more), of all the times (e.g., 10 times) that of the acquired driving attribute. It is of note that attribute values α and β may also be specified as attribute values having a certain range, in addition to parameter values (a set thereof).

Also, the following case is conceivable.
- driving attribute value α when driver Ais estimated at step S14 in a first movement
- driving attribute value α when driver A is estimated at step S14 in a second movement
- driving attribute value α when driver Ais estimated at step S14 in a third movement
- driving attribute value β when driver A is estimated at step S14 in a fourth movement
- driving attribute value β when driver Ais estimated at step S14 in a fifth movement
- driving attribute value β when driver Ais estimated at step S14 in a sixth movement
- driving attribute value β when driver A is estimated at step S14 in a seventh movement
- driving attribute value β when driver A is estimated at step S14 in an eighth movement
- driving attribute value β when driver Ais estimated at step S14 in a ninth movement
- driving attribute value β when driver Ais estimated at step S14 in a tenth movement

In such a case, learning model generating unit 332 deems driving attribute value α in the first to third movements as noise, and does not adopt it as training data for driver A, but instead adopts driving attribute value β in the fourth to tenth movements as training data. In other words, if the driving attribute value changes by a threshold value or more (e.g., changes from driving attribute value α to driving attribute value β), and the new driving attribute value continues for a threshold number of times or more (e.g., if the threshold value is seven times, new driving attribute value β continues for seven times after driving attribute value α), learning model generating unit 332 uses the new driving attribute value (e.g., driving attribute value β) as the training data.

### [Other modifications]

It is of note that the block diagram used in the description of the above embodiment shows blocks of functional units. These function blocks (constituent units) can be realized by any combination of at least one of hardware and software. The method of realizing each function block is not particularly limited. That is, each functional block may be realized by using one apparatus that is physically or logically coupled to, or may be realized by directly or indirectly connecting two or more apparatus that are physically or logically separated (using, for example, a wired connection, a wireless connection, or the like), and using a plurality of these apparatus. Functional blocks may also be realized by combining the one apparatus or a plurality of the apparatus with software.

Examples of functions include determining, deciding, summing, calculating, processing, deriving, surveying, searching, confirming, receiving, transmitting, outputting, accessing, solving, selecting, setting, establishing, comparing, assuming, expecting, considering, broadcasting, notifying, communicating, forwarding, configuring, reconfiguring, allocating, mapping, assigning, and the like, but these are not limitations. For example, a functional block (constituent unit) that causes transmission to function may be referred to as a transmission control unit (transmitting unit) or a transmitter (transmitter). In any event, as described above, the method of realizing a function is not particularly limited.

For example, the apparatus or the like in the above embodiment of the present invention may function as a computer that performs processing as set out in the present invention.

The modes/embodiment described in the present invention may be applied to at least one of a system that uses LTE (Long Term Evolution), LTE-A (LTE-Advanced), SUPER 3G, IMT-Advanced, 4G (4^{th} generation mobile communication system), 5G (5^{th} generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-Wide Band), Bluetooth (registered trademark), another appropriate system, or a next-generation system that has been developed based on the systems described above. Also, a plurality of systems may also be applied in combination (e.g., a combination of at least one of LTE and LTE-A and 5G).

The order of the processing procedures, sequences, flowcharts and the like of the modes/embodiment described in the present invention may be changed, as long as no inconsistency results. For example, with regard to the methods described in the present invention, the elements of the various steps are presented using an illustrative order, but are not limited to the order in which they are presented.

Information and the like that has been input/output may be saved in a specific location (for example, a memory), or may be managed using a management table. The information and the like that is input/output can be overwritten, updated, or added to. Information and the like that has been output may be deleted. Information and the like that has been input may be transmitted to another apparatus.

Determination may be performed according to a value (0 or 1) represented by 1 bit, or may be performed according to a Boolean value (Boolean: true or false), or may be performed by comparing numerical values (for example, comparison with a predetermined value).

Regardless of whether software is referred to as software, firmware, middleware, microcode, hardware description language, or by another name, "software" should be interpreted broadly as meaning commands, command sets, code, code segments, program code, programs, sub-programs, software modules, applications, software applications, software packages, routines, subroutines, objects, executable files, execution threads, sequences, functions, and the like. Additionally, software, commands, and the like may be exchanged via a transmission medium. For example, when software is transmitted from a website, a server, or another remote source using hardwired technologies such as coaxial cable, fiber optic cable, twisted pair cabling, or digital subscriber line (DSL), and/or wireless technologies such as infrared light, radio waves, or microwaves, at least one of these hardwired technologies and wireless technologies is included in the definition of "transmission medium."

The information, signals, and the like described in the present invention may be expressed using any of a variety of different techniques For example, data, instructions, commands, information, signals, bits, symbols, chips, and the like that may be referred to throughout all of the foregoing descriptions may be realized as voltages, currents, electromagnetic waves, magnetic fields or magnetic particles, photo fields or photons, or any desired combination thereof.

It is of note that a term that has been described in the present invention and a term required to understand the present invention may be substituted by a term that has the same or a similar meaning.

Also, information, a parameter, or the like described in the present invention may be represented by an absolute value, by a relative value derived from a predetermined value, or by other corresponding information.

The phrase "based on" used in the present invention does not mean "based only on" unless specified as such. In other words, the phrase "based on" may be used to mean "based only on" or "based at least on."

Any reference to an element for which a phrase such as "first" or "second" that is used in the present invention does not generally limit the amount or order of such an element. These phrases may be used in the present invention as a convenient way to distinguish two or more elements. Therefore, a reference to first and second elements does not mean that only those two elements are adopted, or that the first element must precede the second element.

The "unit" in the configuration of each apparatus described above may be replaced by a "means," a "circuit," a "device," or the like.

In the present invention, when terms "include" and "including" and a variety of these terms are used, the terms are intended to be comprehensive and equivalent to the term "comprising." Moreover, the term "or" used in the present invention is not used as an exclusive OR.

When an article such as a, an, or the in English is present in the English translation of the present invention, the present invention may include a case where a noun following these articles is plural.

In the present invention the phrase "A and B are different" may mean "A and B are different from each other." This phrase may mean that "A and B are each different from C." Terms such as "away" and "coupled" may be construed in a similar manner as "different."

### Reference Signs List

- 1: Information processing system
- 2: Communication network
- 10, 10a, 10b, 10c: Terminal
- 20: Vehicle
- 21: In-vehicle equipment
- 30: Server
- 31: On-board user specifying unit
- 32: Attribute acquiring unit
- 331: Driver estimating unit
- 332: Learning model generating unit
- 333: Driver specifying unit
- 34: Specified result accumulating unit
- 1001: Processor
- 1002: Memory
- 1003: Storage
- 1004: Communication unit
- 1005: Input device
- 1006: Output device
- 1007: Positioning unit
- 1008: Sensor
- 3001: Processor
- 3002: Memory
- 3003: Storage
- 3004: Communication unit
- 3005: Input device
- 3006: Output device

## Claims

1. An information processing apparatus (30) comprising:
an on-board user specifying unit (31) configured to specify a group of users on board a vehicle (20);
an acquiring unit (32) configured to acquire an attribute value of driving of the vehicle (20);
a driver estimating unit (331) configured to estimate, based on the group of users specified by the on-board user specifying unit (31) relative to a plurality of movements of groups of users' movements of the vehicle (20), that a user driving the vehicle (20) is a user who is included in the group out of the groups of users for which the attribute value acquired by the acquiring unit (32) is the same relative to the plurality of movements of the vehicle (20); and
a learning model generating unit (332) configured to generate a learning model using identification information of the user specified by the driver estimating unit and driving attributes of the user as training data.

2. The information processing apparatus (30) according to claim 1, wherein the on-board user specifying unit (31) is configured to specify a group of users on board the vehicle (20) by comparing a position of a terminal carried by each user and a position of the vehicle (20).

3. The information processing apparatus (30) according to claim 1, wherein the on-board user specifying unit (31) is configured to specify the group of users on board in the vehicle (20) by comparing data detected by a terminal carried by each user and data detected by the vehicle (20).

4. The information processing apparatus (30) according to any one of claims 1 to 3, wherein the learning model generating unit (332) is configured to generate a learning model using, as training data, identification information of the user estimated by the driver estimating unit, driving attributes of the user, and identification information of users included in the group of users specified by the on-board user specifying unit (31).

5. The information processing apparatus (30) according to any one of claims 1 to 4, wherein the learning model generating unit (332) is configured to generate a learning model using, as training data, identification information of the user estimated by the driver estimating unit, driving attributes of the user, and attributes of the vehicle (20).

6. The information processing apparatus (30) according to any one of claims 1 to 5, wherein the learning model generating unit (332) is configured to generate a learning model using, as training data, identification information of the user estimated by the driver estimating unit, driving attributes of the user, and an environment where the vehicle (20) is driven.

## Patentansprüche

1. Informationsverarbeitungseinrichtung (30), umfassend:
eine fahrzeugseitige Benutzerspezifizierungseinheit (31), die so konfiguriert ist, dass sie eine Gruppe von Benutzern an Bord eines Fahrzeugs (20) spezifiziert;
eine Erfassungseinheit (32), die so konfiguriert ist, dass sie einen Attributwert des Fahrens des Fahrzeugs (20) erfasst;
eine Fahrerschätzungseinheit (331), die so konfiguriert ist, dass sie auf der Grundlage der von der fahrzeugseitigen Benutzerspezifizierungseinheit (31) spezifizierten Gruppe von Benutzern in Bezug auf eine Vielzahl von Bewegungen von Benutzergruppenbewegungen des Fahrzeugs (20) schätzt, dass ein das Fahrzeug (20) fahrender Benutzer ein Benutzer ist, der in der Gruppe aus den Gruppen von Benutzern eingeschlossen ist, für die der von der Erfassungseinheit (32) erfasste Attributwert in Bezug auf die Vielzahl von Bewegungen des Fahrzeugs (20) gleich ist; und
eine Lernmodell-Erzeugungseinheit (332), die so konfiguriert ist, dass sie ein Lernmodell unter Verwendung von Identifikationsinformationen des Benutzers, die durch die Fahrerschätzeinheit spezifiziert werden, und von Fahrattributen des Benutzers als Trainingsdaten erzeugt.

2. Informationsverarbeitungseinrichtung (30) nach Anspruch 1, wobei die fahrzeugseitige Benutzerspezifizierungseinheit (31) so konfiguriert ist, dass sie eine Gruppe von Benutzern an Bord des Fahrzeugs (20) spezifiziert, indem sie eine Position eines von jedem Benutzer getragenen Endgeräts und eine Position des Fahrzeugs (20) vergleicht.

3. Informationsverarbeitungseinrichtung (30) nach Anspruch 1, wobei die fahrzeugseitige Benutzerspezifizierungseinheit (31) so konfiguriert ist, dass sie die Gruppe von Benutzern an Bord in dem Fahrzeug (20) durch Vergleichen von Daten, die von einem von jedem Benutzer getragenen Endgerät erfasst werden, und von Daten, die von dem Fahrzeug (20) erfasst werden, spezifiziert.

4. Informationsverarbeitungseinrichtung (30) nach einem der Ansprüche 1 bis 3, wobei die Lernmodell-Erzeugungseinheit (332) so konfiguriert ist, dass sie ein Lernmodell erzeugt, das als Trainingsdaten Identifikationsinformationen des Benutzers, die von der Fahrerschätzungseinheit geschätzt werden, Fahrattribute des Benutzers und Identifikationsinformationen von Benutzern, die in der von der fahrzeugseitigen Benutzerspezifizierungseinheit (31) spezifizierten Gruppe von Benutzern eingeschlossen sind, verwendet.

5. Informationsverarbeitungseinrichtung (30) nach einem der Ansprüche 1 bis 4, wobei die Lernmodell-Erzeugungseinheit (332) so konfiguriert ist, dass sie ein Lernmodell erzeugt, indem sie als Trainingsdaten Identifikationsinformationen des von der Fahrerschätzungseinheit geschätzten Benutzers, Fahrattribute des Benutzers und Attribute des Fahrzeugs (20) verwendet.

6. Informationsverarbeitungseinrichtung (30) nach einem der Ansprüche 1 bis 5, wobei die Lernmodell-Erzeugungseinheit (332) so konfiguriert ist, dass sie ein Lernmodell erzeugt, das als Trainingsdaten Identifikationsinformationen des Benutzers, die von der Fahrerschätzungseinheit geschätzt werden, Fahrattribute des Benutzers und eine Umgebung, in der das Fahrzeug (20) gefahren wird, verwendet.

## Revendications

1. Dispositif (30) de traitement d'informations comprenant :
une unité de spécification (31) d'utilisateurs embarqués configurée pour spécifier un groupe d'utilisateurs à bord d'un véhicule (20) ;
une unité d'acquisition (32) configurée pour acquérir une valeur d'attribut de conduite du véhicule (20) ;
une unité d'estimation (331) de conducteur configurée pour estimer, sur la base du groupe d'utilisateurs spécifiés par l'unité de spécification (31) d'utilisateurs embarqués par rapport à une pluralité de mouvements de mouvements de groupes d'utilisateurs du véhicule (20), qu'un utilisateur conduisant le véhicule (20) est un utilisateur qui est inclus dans le groupe parmi les groupes d'utilisateurs pour lequel la valeur d'attribut acquise par l'unité d'acquisition (32) est la même par rapport à la pluralité de mouvements du véhicule (20) ; et
une unité de génération (332) de modèle d'apprentissage configurée pour générer un modèle d'apprentissage en utilisant des informations d'identification de l'utilisateur spécifié par l'unité d'estimation de conducteur et des attributs de conduite de l'utilisateur en tant que données d'apprentissage.

2. Dispositif (30) de traitement d'informations selon la revendication 1, dans lequel l'unité de spécification (31) d'utilisateurs embarqués est configurée pour spécifier un groupe d'utilisateurs à bord du véhicule (20) en comparant une position d'un terminal porté par chaque utilisateur et une position du véhicule (20).

3. Appareil (30) de traitement d'informations selon la revendication 1, dans lequel l'unité de spécification (31) d'utilisateurs embarqués est configurée pour spécifier le groupe d'utilisateurs à bord du véhicule (20) en comparant des données détectées par un terminal porté par chaque utilisateur et des données détectées par le véhicule (20).

4. Dispositif (30) de traitement d'informations selon l'une quelconque des revendications 1 à 3, dans lequel l'unité de génération (332) de modèle d'apprentissage est configurée pour générer un modèle d'apprentissage en utilisant, en tant que données d'apprentissage, des informations d'identification de l'utilisateur estimé par l'unité d'estimation de conducteur, des attributs de conduite de l'utilisateur, et des informations d'identification d'utilisateurs inclus dans le groupe d'utilisateurs spécifiés par l'unité de spécification (31) d'utilisateurs embarqués.

5. Dispositif (30) de traitement d'informations selon l'une quelconque des revendications 1 à 4, dans lequel l'unité de génération (332) de modèle d'apprentissage est configurée pour générer un modèle d'apprentissage en utilisant, en tant que données d'apprentissage, des informations d'identification de l'utilisateur estimé par l'unité d'estimation de conducteur, des attributs de conduite de l'utilisateur, et des attributs du véhicule (20).

6. Dispositif (30) de traitement d'informations selon l'une quelconque des revendications 1 à 5, dans lequel l'unité de génération (332) de modèle d'apprentissage est configurée pour générer un modèle d'apprentissage en utilisant, en tant que données d'apprentissage, des informations d'identification de l'utilisateur estimé par l'unité d'estimation de conducteur, des attributs de conduite de l'utilisateur, et un environnement où le véhicule (20) est conduit.
